# EUROPÄISCHE PATENTSCHRIFT

(11) **EP 1 529 611 B1**
(45) Veröffentlichungstag und Bekanntmachung des Hinweises auf die Patenterteilung: **05.12.2007**
(21) Anmeldenummer: 04450175.7
(22) Anmeldetag: 15.09.2004
(51) Int. Cl.: B27B 5/22, B27B 25/00, B23D 47/04

(54) **Schneidevorrichtung für Holz**
Cutting device for wood
Dispositif de coupe de bois

(30) Priorität: 07.11.2003 AT 17822003
(43) Veröffentlichungstag der Anmeldung: 11.05.2005
(73) Patentinhaber: Posch Gesellschaft m.b.H., 8430 Leibnitz/Kaindorf (AT)
(72) Erfinder: Reiter, Erwin, Ing., 8430 Tillmitsch (AT); Gigler, Thomas, Ing., 8424 Gabersdorf (AT)
(74) Vertreter: Wildhack, Helmut

(56) Entgegenhaltungen:
- DE-C- 533 064
- US-A- 4 869 303

## Beschreibung

Die Erfindung betrifft eine Schneidevorrichtung gemäß dem Oberbegriff des Anspruches 1. Eine solche Schneidevorrichtung ist dem Dokument DE 533064 zu entnehmen.

Schneidvorrichtungen für Holz sind in verschiedenen Ausführungsformen bekannt. So sind beispielsweise Maschinen bekannt, bei denen Baumstämme von Förderbändern zu rotierenden Kreissägeblättern hin bewegt und in Längsrichtung zu Brettern bzw. Planken geschnitten werden.

Auch sind Maschinen bekannt, in denen Holz, insbesondere Baumstämme, auf Förderbändern quer zur späteren Schnittebene bewegt werden, wo sie von einer beweglichen Sägeeinheit, insbesondere einer Kreissäge, durch Auf- und Nieder- bzw. Hin und Her Bewegungen des Sägeblattes verschnitten werden. Diese Ausführungsform hat insbesondere den Nachteil, dass das bewegliche Sägeblatt sehr reparaturanfällig ist.

Eine halbautomatische Variante, bei der Holzstücke von Hand z.B. in eine Wippe einer Wippkreissäge oder auf den Tisch einer Rolltischsäge, eingelegt werden und der Schneidvorgang von Hand ausgelöst wird, ist auch bekannt. Nach dem Schneidvorgang wird das Holz von Hand entsprechend der gewünschten Holzlänge vorgeschoben und erneut abgelängt. Dazu werden, um eine angemessene Leistung zu erzielen, üblicherweise zwei Personen benötigt. Eine Person muss das Rohholz in die Wippe bzw. auf den Tisch legen. Die zweite Person muss die Holzscheite ablängen, weiterschieben und die abgeschnittenen Holzstücke verladen.

Diese Ausführungsform hat den Nachteil, dass die Arbeit nur von zwei Personen effizient durchgeführt werden kann. Außerdem gibt es bei derartigen Verfahren, insbesondere beim manuellen Vorschieben bzw. Ablängen, zahlreiche Gefahrenquellen zu berücksichtigen.

Ziel dieser Erfindung ist es, diese Nachteile zu vermeiden und eine konstruktiv einfache Schneidevorrichtung der eingangs erwähnten Art zu erstellen, die stabil und sicher zugleich ist.

Erfindungsgemäß wird dies bei einer Schneidevorrichtung der eingangs erwähnten Art durch die kennzeichnenden Merkmale des Anspruches 1 erreicht.

Durch die kennzeichnenden Merkmale des Anspruches 1 ergibt sich der Vorteil, dass die Transportvorrichtung, insbesondere ein Förderband, auf dem Rohholz gefördert wird, und die Sägeeinheit räumlich voneinander getrennt angeordnet sind. Dadurch können beide Einheiten voneinander unabhängig operieren und sind in ihrer Wirkung nur durch die Verschiebelade miteinander verbunden. Um eine konstruktionstechnisch möglichst einfache Vorrichtung zu erhalten, fördert die Transportvorrichtung im wesentlichen senkrecht zur Scheidebene.

Durch die Ausbildung der Verschiebelade gemäß den kennzeichnenden Merkmalen des Anspruches 1 gelangt das in die Verschiebelade einzulegende Rohholz auf schnelle und einfache Art und Weise in den Einflussbereich der Transportvorrichtung.

Durch die konstruktiv einfachen Merkmale gemäß Anspruch 1 wird eine hohe Stabilität der Verschiebelade gewährleistet, gekoppelt mit der konstruktiven Einfachheit, insbesondere ausgezeichnet durch einen geringen Bedarf an Reparaturarbeiten.

Bevorzugte Ausführungsformen der Erfindung sind den abhängigen Ansprüchen zu entnehmen.

Aus konstruktionstechnischer Hinsicht ist es vorteilhaft, wenn die Merkmale gemäß Anspruch 2 ausgebildet sind.

Um dem Rohholz einen ungehinderten Zugang zum Schneidbereich der Sägeeinheit zu gestatten, ist es vorteilhaft, wenn die Merkmale gemäß Anspruch 2 ausgebildet sind.

Eine effektive Wirkverbindung zwischen der Sägeeinheit und der Transportvorrichtung wird durch die Merkmale des Anspruchs 2 sichergestellt.

In diesem Zusammenhang ist es besonders vorteilhaft, wenn die Merkmale des Anspruches 2 vorgesehen sind. Damit ist sichergestellt, dass die Verschiebelade stabil und ohne große Widerstände geführt ist.

Um die Bewegung der Verschiebelade, insbesondere bei der Einbringung von Rohholz bzw. bei der Beladung zu stoppen und dadurch die Beladung zu erleichtern, ist es vorteilhaft, wenn die Merkmale des Anspruches 3 vorgesehen sind.

Die Merkmale des Anspruches 3 stellen sicher, dass Körperteile, insbesondere Hände, nicht in den Bereich der Verschiebelade gelangen können bzw. dass schwere Verletzungen verhindert werden.

Die Merkmale des Anspruches 4 sind aus konstruktiven Gründen, insbesondere um die Wege des Rohholzes möglichst kurz zu halten bzw. die Verschiebung des Rohholzes möglichst effizient zu gestalten, vorzuziehen.

Eine ebenfalls große Erleichterung bei der Verschiebung des Rohholzes durch die Verschiebelade wird durch die Merkmale des Anspruches 4 gewährleistet.

Durch die Merkmale des Anspruches 4 wird sichergestellt, dass das Rohholz beim Schneidvorgang nicht abgehoben wird bzw. dass das Holz, wenn das Sägeblatt oder die Sägeeinheit auf einen harten Einschluss bzw. einen Metallteil im Holz trifft, nicht nach oben weggeschleudert werden kann, sondern allein durch die Sägewirkung auf die Unterlage bzw. in die Verschiebelade gepresst wird.

Die vorteilhafte Ausführung der Transportvorrichtung gemäß den Merkmalen des Anspruches 4 stellt sicher, dass das Holz stabil und kontinuierlich bis ans Ende der Transportvorrichtung gefördert werden kann.

In diesem Zusammenhang ist es besonders vorteilhaft, wenn die Merkmale des Anspruches 5 vorgesehen sind, wodurch die Länge des abzuschneidenden Rohholzes exakt, einfach und schnell eingestellt werden kann.

Zur Fixierung des Rohholzes bzw. um zu Verhindern, dass das Rohholz beim Schneidevorgang verkantet bzw. das Sägeblatt blockiert, ist es vorteilhaft, wenn die Merkmale des Anspruches 5 ausgebildet sind.

Die vorteilhaften Merkmale gemäß Anspruch 5 gewährleisten, dass das Holzstück nach dem Schneidevorgang in die untenliegende Schurre fallen kann.

Zum leichten und schnellen Abtransport der abgeschnittenen Holzstücke ist es vorteilhaft, wenn die Merkmale gemäß Anspruch 5 vorgesehen sind.

Eine optimale und effiziente Betreibung der Schneidevorrichtung wird durch die Merkmale des Anspruches 6 vorgeschlagen.

Durch die Merkmale nach Anspruch 7 wird auf das Rohholzstück ein zusätzlicher Druck aus der richtigen Richtung ausgeübt und es verbleibt somit in seiner Position ohne zu wackeln bzw. während des Sägevorganges zu verrutschen bzw. von der Unterlage abzuheben.

Zur besseren Transportierbarkeit bzw. um diverse Schneidarbeiten vor Ort, z.B. in einem Wald, durchführen zu können, ist es vorteilhaft, wenn die Merkmale gemäß Anspruch 8 ausgebildet sind.

Weitere Vorteile an der Ausgestaltung der Erfindung ergeben sich aus der Beschreibung und den beiliegenden Zeichnungen.

Die Erfindung ist anhand von Ausführungsbeispielen in den Zeichnungen schematisch dargestellt und wird im folgenden unter Bezugnahme auf die Zeichnungen beispielsweise beschrieben.
Fig. 1 zeigt eine schematische Draufsicht auf die erfindungsgemäße Schneidevorrichtung.
Fig. 2 zeigt eine schematische Seitenansicht gemäß Pfeil B nach Fig. 1.
Fig. 3 zeigt eine Seitenansicht der Schneidevorrichtung.
Fig. 4 zeigt eine Schnittansicht gemäß der Schnittlinie A-A nach Fig. 3.
Fig. 5 zeigt eine Draufsicht auf die erfindungsgemäße Schneidevorrichtung.

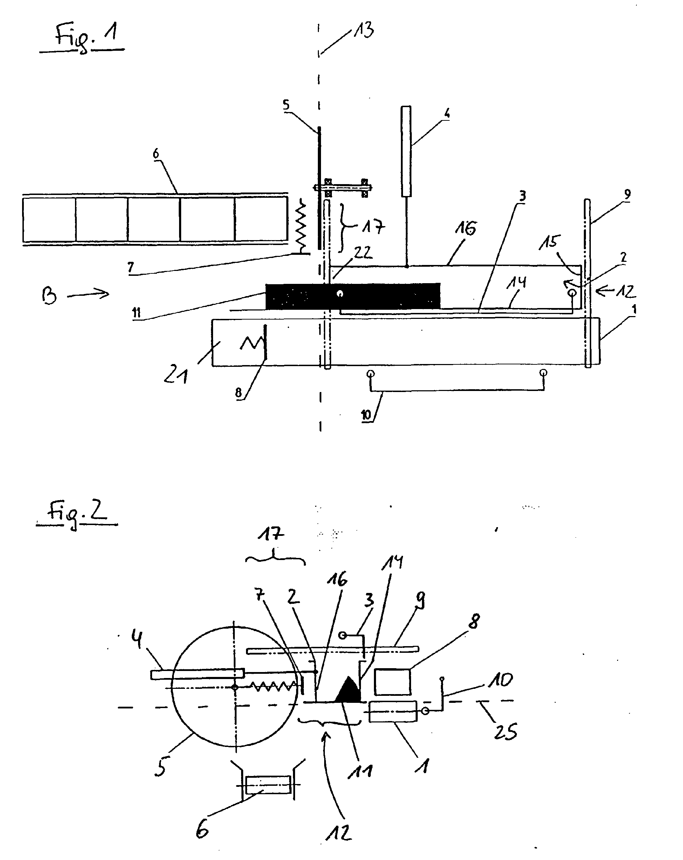

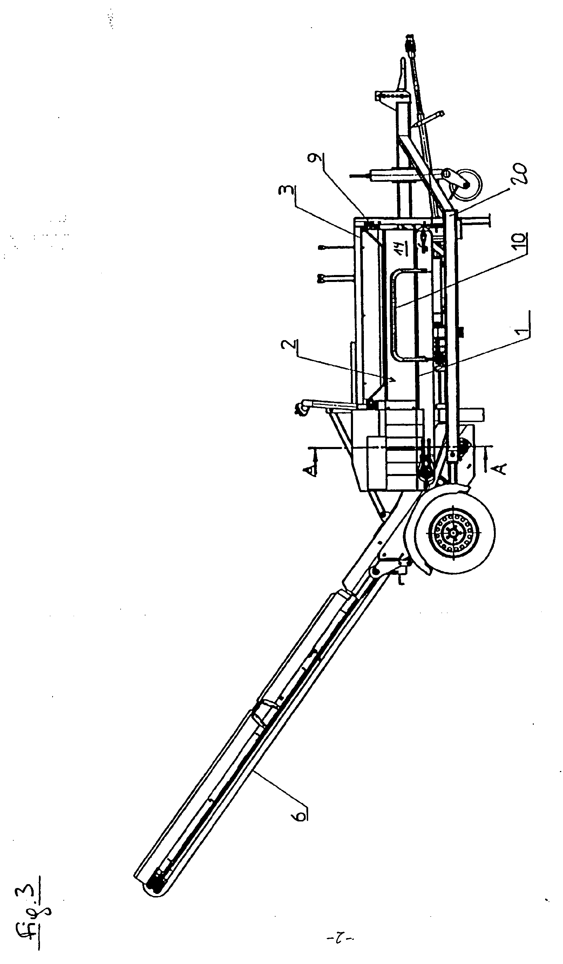

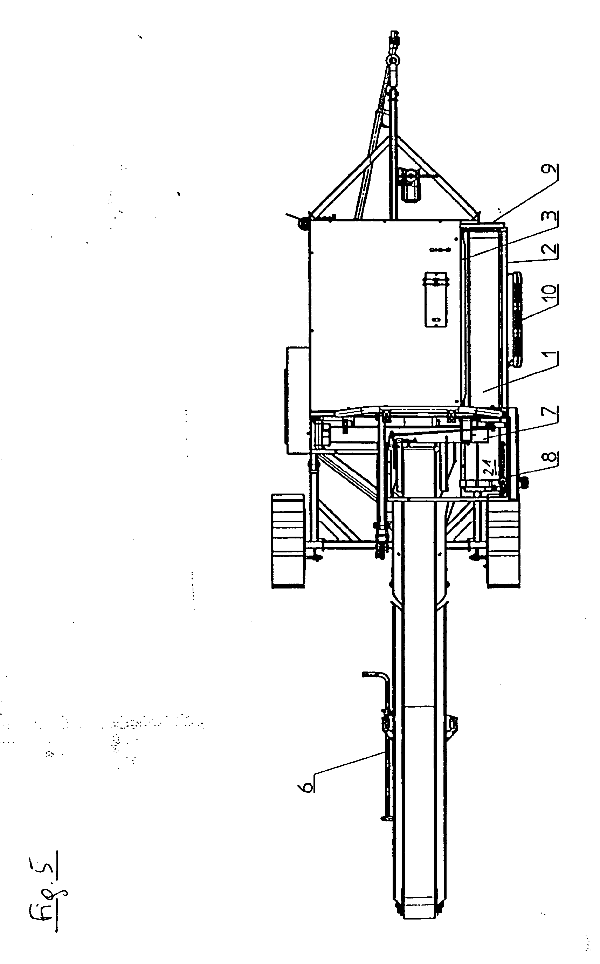

Fig. 1 und 2 zeigen jeweils schematische Ansichten der erfindungsgemäßen Schneidevorrichtung. Ergänzt werden diese schematischen Ansichten zur Verdeutlichung durch die Fig. 3 bis 5, die die tatsächliche Schneidevorrichtung aus verschiedenen Perspektiven zeigen.

Die Schneidevorrichtung umfasst eine Sägeeinheit 5, insbesondere eine Kreissägeeinheit, die an der Schneidevorrichtung lage- bzw. ortsfest befestigt bzw. von dieser getragen ist bzw. deren örtliche Position auf der Schneidevorrichtung nicht veränderbar ist. Damit unterscheidet sich die erfindungsgemäße Schneidevorrichtung von Schneidevorrichtungen, bei denen die Säge auf einem Schwenkarm gelagert ist bzw. nach oben oder nach unten oder hin und her versetzbar bzw. bewegbar ist. Bei der erfindungsgemäßen Schneidevorrichtung verbleibt die Sägeeinheit 5 lage- bzw. ortsfest und das Holz wird gegen diese Sägeeinheit 5 bewegt.

Als Sägeeinheit 5 ist neben einer Kreissägeeinheit beispielsweise auch eine Stichsäge, ein umlaufender Endlossägedraht, eine Kettensäge oder eine Bandsäge.

Die Sägerichtung bzw. Sägewirkung der Sägeeinheit 5 sollte vorteilhafterweise von oben nach unten verlaufen. Das heißt, die Zähne der Sägeeinheit 5, z.B. einer Kreissäge oder einer Bandsäge, sollten auf das Holz in einer von oben nach unten verlaufenden Bewegung einwirken und dadurch zersägen. Dadurch wird das Rohholz 11 zusätzlich nach unten gedrückt und fixiert.

Weiters umfasst die Schneidevorrichtung eine Transportvorrichtung 1, die das zu zerkleinernde Rohholz 11 weiterbefördert. Diese Transportvorrichtung 1 kann ein Förderband, ein Fördergurt oder eine Anordnung rotierender Walzen und/oder Rollen sein. Die Förderrichtung der Transportvorrichtung 1 verläuft im Wesentlichen senkrecht zur Schneidebene 13 der Sägeeinheit 5, und zwar in Richtung auf die Schneidebene 13.

Zwischen der Sägeeinheit 5 und der Transportvorrichtung 1 ist eine bewegungsneutrale Zufuhrzone 12 ausgebildet, die eine räumliche Trennung der Transportvorrichtung 1 von der Sägeeinheit 5 bewirkt. Die Transportvorrichtung 1 und die Sägeeinheit 5 sind durch diese Zufuhrzone 12 beabstandet, d.h. Rohholz 11, das auf der Transportvorrichtung 1 befördert wird, gerät, solange es sich auf der Transportvorrichtung 1 befindet, nicht in den Schneidbereich 17 der Sägeeinheit 5 und kann nicht geschnitten werden. Die Zufuhrzone 12 ist dabei, wie in Fig. 2 gut erkennbar, als, insbesondere horizontale(r), Tisch bzw. Platte ausgebildet.

Die Schneidevorrichtung umfasst weiters eine Verschiebelade 2, die in ihrer Ausgangsstellung oberhalb der Transportvorrichtung 1 angeordnet ist. Die Verschiebelade 2 hat keinen Boden, d.h. sie besteht im Wesentlichen aus einer der Sägeeinheit 5 nahen Wand 16 und einer der Sägeeinheit 5 fernen Wand 14, die zueinander parallel sind. Diese beiden Wände 14 und 16 werden insbesondere in den Endbereichen der Verschiebelade 2 über Verbindungselemente 15 zusammen gehalten. Die Verbindungselemente 15 sind insbesondere als Stege oder als einen gewissen Abstand zwischen den Wänden 14, 16 vorgebende Abstandhalter ausgebildet. Die Verschiebelade 2 erstreckt sich in ihrer Ausdehnung von einem der Schneidebene 13 fernen Endbereich senkrecht zur Schneidebene 13 bis kurz vor die Schneidebene 13. In diesem Bereich 22 in ihrem der Schneidebene 13 nahen Endbereich 22 ist die Verschiebelade 2 offen ausgebildet, d.h. das Rohholz 11 kann ungehindert in die Schnittebene 13 gelangen.

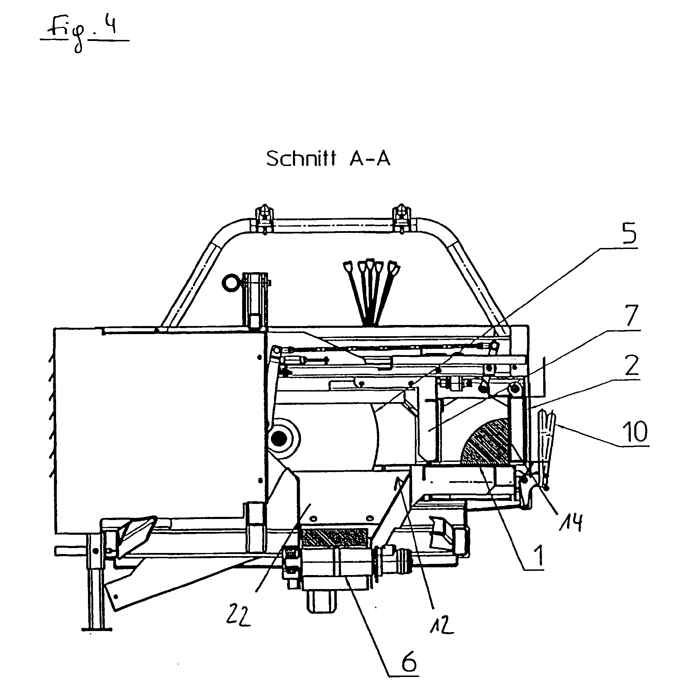

Die Verschiebelade 2 ist auf im Wesentlichen horizontal verlaufenden und parallel zur Schnittebene 13 angeordneten, insbesondere auf einer Tragekonstruktion befestigten, Linearführungen 9 geführt. Entlang dieser Linearführungen 9 kann die Verschiebelade 2 hin und zurück bewegt werden. Die Bewegung der Verschiebelade 2 erfolgt dementsprechend parallel zur Schneidebene 13, und zwar ausgehend von der in Fig. 4 dargestellten Ausgangsstellung bzw. der vorderen Endstellung der Verschiebelade 2 oberhalb der Transportvorrichtung 1 über die Zufuhrzone 12 (Fig. 2) bis in den Schneidbereich 17 der Sägeeinheit 5 hinein, entsprechend der hinteren Endstellung der Verschiebelade 2, und wieder zurück in die Ausgangsstellung, oberhalb der Transportvorrichtung 1.

Die Verschiebelade 2 wird insbesondere gleichmäßig bewegt, wobei die Bewegung insbesondere über einen hydraulischen Zylinder oder einen andersartigen Antrieb erfolgt.

An der Verschiebelade 2 bzw. im außenseitigen Bereich der Verschiebelade 2 kann ein Anhaltemechanismus 10, insbesondere in Form eines Bügels oder eines Griffes, angeordnet sein. Dieser Anhaltemechanismus 10 dient zur Unterbrechung der Bewegung der Verschiebelade 2, insbesondere bei der Einbringung des Rohholzes 11 in die Verschiebelade 2.

Längs bzw. oberhalb der Verschiebelade 2 kann eine Not-Stopp-Klappe 3 zum sofortigen Stoppen der Bewegung der Verschiebelade 2 vorgesehen sein, die ein unbeabsichtigtes Hineingeraten diverser Körperteile in die Verschiebelade 2, insbesondere der Hände beim Einbringen von Rohholz 11, absichern bzw. verhindern soll.

Die Transportvorrichtung 1 und die Zufuhrzone 12 liegen in einer gemeinsamen, insbesondere horizontalen, Ebene 25, wodurch die Bewegung der Verschiebelade 2 nicht beeinträchtigt wird. Gegebenenfalls liegt auch der Schneidbereich 17 in dieser Ebene 25.

Die Achse der Kreissäge der Sägeeinheit 5 sollte oberhalb oder in dieser Ebene 25 liegen oder oberhalb oder in der Ebene der Zufuhrzone 12. Dadurch wird zusätzlicher Druck auf das Rohholz 11 ausgeübt und ein Verrutschen oder Verkanten verhindert.

Die Transportvorrichtung 1 verläuft im Wesentlichen parallel zur Verschiebelade 2 und parallel zur Zufuhrzone 12 und außerhalb des Schneidbereiches 17 der Sägeeinheit 5. Im Unterschied zur Verschiebelade 2, deren parallel zur Transportvorrichtung 1 verlaufende Längsausdehnung nur bis in den Bereich knapp vor der Schnittebene 13 reicht, durchsetzt die Transportvorrichtung 1 die Schneidebene 13 bzw. steht über die Schneideebene 13 über.

In dem überstehenden Endbereich 21 der Transportvorrichtung 1 bzw. in ihrem der Verschiebelade 2 fernen Endbereich 21 kann ein Anschlagelement 8 vorgesehen sein. Dieses Anschlagelement 8 dient dazu, die Vorwärtsbewegung des Rohholzes 11 mit der Transportvorrichtung 1 zu stoppen und um die Länge des abzuschneidenden Holzstückes bzw. -scheites einzustellen. Dazu ist es vorteilhaft, wenn die Position des Anschlagelements 8 bezüglich des Endbereiches 21 der Transportvorrichtung 1, insbesondere stufenlos, verstellbar ist. Auch ist es vorteilhaft, wenn das Anschlagelement 8 bis zu einem gewissen Grad gefedert ist.

Vorzugsweise auf der der Verschiebelade 2 abgewendeten Seite der Schneidebene 13 ist ein Holzhalter 7 vorgesehen. Der insbesondere komprimierbar bzw. federnd gelagerte Holzhalter 7 ist parallel zur Schneidebene 13 in Richtung der Transportvorrichtung 1 hin und her verschiebbar.

Der Holzhalter 7 dient dazu, das Rohholz 11 in der Verschiebelade 2 zu arretieren und den Schnittvorgang zu verbessern bzw. Schwingungen oder Verkantungen mit dem Sägeblatt zu verhindern.

Der Holzhalter 7 kann einen Arretiermechanismus aufweisen, durch den der Holzhalter 7 nach dem Schneidevorgang für eine bestimmte Zeit, insbesondere für die Zeit bis die Verschiebelade 2 wieder in ihre Ausgangslage oberhalb der Transportvorrichtung 1 zurückgekehrt ist, in seiner komprimierten Position verbleibt und erst zu Beginn eines neuen Scheidevorgangs wieder freigegeben wird und erneut das nächste zu schneidende Rohholz 11 druckbeaufschlagen bzw. festhalten kann.

Zum Abtransport der abgeschnittenen Holzstücke kann auf der der Verschiebelade 2 abgewendeten Seite der Schneidebene 13 eine über eine Schurre 22 zugängliche Ablaufeinrichtung 6, insbesondere in Form eines Förderbandes, eines Fördergurtes od. dgl., vorgesehen sein. Diese Ablaufeinrichtung 6 kann unter einem gewissen veränderbaren Winkel anstellbar sein und damit kann das zu fördernde, abgeschnittene Holz auf Lastwagen verladen werden.

Die gesamte Schneidvorrichtung, umfassend insbesondere die Transportvorrichtung 1, die Sägeeinheit 5, die Ablaufeinrichtung 6 und die Verschiebelade 2, ist vorteilhafterweise als eine gemeinsame Einheit zusammengefasst, die auf einem Tragegerüst bzw. einer Tragekonstruktion 20 befestigt ist.

Einzelne dieser Module, insbesondere die Transportvorrichtung 1 und die Ablaufeinrichtung 6, beispielsweise für den Einsatz bei sehr langem Rohholz, können auch als externe Zusatzmodule, die im Bedarfsfall separat aufgestellt bzw. angebaut werden, ausgebildet sein.

Dementsprechend könnte, wenn sehr lange Baumstämme geschnitten werden müssen, beispielsweise die Transportvorrichtung 1 oder die Ablaufeinrichtung 6, ausgewechselt werden und durch eine Transportvorrichtung 1 oder eine Ablaufeinrichtung 6 ersetzt werden, die es ermöglichen derartiges langes Rohholz zu schneiden.

Die gesamte Schneidvorrichtung kann entweder als fixe bzw. ortsfeste Installation ausgebildet sein oder als selbstfahrende Einheit mit einer Antriebseinrichtung, z.B. einem Motor, ausgerüstet werden. Bei einer besonders vorteilhaften Ausführungsform ist die Schneidvorrichtung auf einer beweglichen bzw. verfahrbaren Gerüst- bzw. Tragekonstruktion 20, insbesondere einem Anhänger, angeordnet. Dadurch kann die Schneidvorrichtung bequem in den Wald transportiert werden, wo ein einzelner Mann vor Ort Stämme zu Schnittholz verarbeiten kann.

### Das Verfahren zum Schneiden von Rohholz 11 läuft wie folgt ab:

Die Bewegung der Verschiebelade 2 wird durch Betätigung des Anhaltemechanismus 10 gestoppt und zumindest ein abzulängendes Stück Rohholz 11 wird in die Verschiebelade 2 eingebracht. Dadurch dass die Verschiebelade 2 bodenlos ausgebildet ist, liegt das Rohholz 11 auf der fördernden Transportvorrichtung 1 auf. Die Bewegung der Transportvorrichtung 1 bewirkt, dass das Rohholz 11 senkrecht zur Schneidebene 13 in Richtung der Schneidebene 13 vorgeschoben bzw. gefördert wird. Das Rohholz 11 wird mit der Transportvorrichtung 1 gegen das Anschlagelement 8 vorgeschoben, wodurch die Länge des abzuschneidende Holzstückes definiert wird. Liegt das Rohholz 11 am Anschlagselement 8 an, bewegt sich die Transportvorrichtung 1 unter dem Rohholz 11 durch.

Sobald der Anhaltemechanismus 10 freigegeben wird, beginnt die Bewegung der Verschiebelade 2, und zwar parallel zur Schneidebene 13 in Richtung der Zufuhrzone 12 zwischen der Transportvorrichtung 1 und dem Schneidbereich 17. Die Verschiebung des Rohholzes 11 erfolgt je nach Bewegungsrichtung, durch die Einwirkung einer der beiden Wände 14, 16 der Verschiebelade 2 auf das Rohholz 11. Das Rohholz 11 erfährt nunmehr keine Vorwärtsbewegung durch die Transportvorrichtung 1 mehr, da sich die Verschiebelade 2 im Wesentlichen über der bewegungsneutralen Zufuhrzone 12 befindet, wobei das Rohholzstück 11 auf der Zufuhrzone 12 aufliegt.

Durch die weitere Bewegung der Verschiebelade 2 wird das Rohholzstück 11 gegen den Holzhalter 7 und den Schneidbereich 17 der Sägeeinheit 5, insbesondere gegen das Kreissägeblatt einer Kreissäge, gedrückt.

Bei dem nun folgenden Schneidvorgang wird das Rohholz 11 auf der der Verschiebelade 2 fernen Seite der Schnittebene 13 vom Holzhalter 7 in Position gehalten, um eventuelle Vibrationen, die während des Sägevorganges auftreten können, zu unterdrücken und das Rohholz 11 zu fixieren.

Sobald die Verschiebelade 2 in ihrer bezüglich der Transportvorrichtung 1 fernen hinteren Endstellung angelangt ist, ist das Rohholz 11 vollkommen durchgeschnitten. Die Bewegung der Verschiebelade 2 wird nun umgekehrt und die Verschiebelade 2 bewegt sich zurück in Richtung ihrer Ausgangsstellung oberhalb der Transportvorrichtung 1.

Der Holzhalter 7 verharrt noch für eine gewisse Zeit in seiner Position, was beispielsweise mechanisch durch Reibschluss gelöst werden kann. Dadurch kann das abgelängte bzw. abgesägte Holzstück nach unten in die Schurre 22 fallen und wird von der Ablaufeinrichtung 6 abtransportiert.

Die Verschiebende 2 mit dem verbliebenen gekürzten Rest-Rohholz 11 gelangt bei ihrer Rückbewegung anschließend erneut in den Wirkungsbereich der Transportvorrichtung 1. Durch die Wirkung der Transportvorrichtung 1 wird das Rohholz 11 erneut bis zum Anschlagelement 8 vorgeschoben. Sobald die Verschiebelade 2 in der vordersten Endstellung oberhalb der Transportvorrichtung 1 angekommen ist, wird automatisch die Fixierung des Holzhalters 7 gelöst, d.h. der Arretiermechanismus gibt den Holzhalter 7 frei und der Holzhalter 7 fährt schlagartig nach vorne, um beim nächsten Schneidvorgang erneut das Rohholz 11 fixieren zu können.

Dieser Vorgang wiederholt sich so lange, bis das eingelegte Rohholz 11, insbesondere vollkommen, abgelängt ist bzw. das Rest-Rohholz 11 eine Länge aufweist, die kleiner ist als der Abstand vom Anschlagelement 8 bis zur Scheidebene 13. Das letzte kurze Stück Rest-Rohholz 11 wird ebenfalls bis zum Anschlagelement 8 gefördert und kann von dort entsorgt werden oder ebenfalls in die Schurre 22 abgeworfen werden.

Durch Betätigung des Anhaltemechanismus 10 kann die Bewegung der Verschiebelade 2 gestoppt werden und ein neues Rohholz 11 eingelegt werden.

Die Geschwindigkeit des Vorschubs der Transportvorrichtung 1 und die Geschwindigkeit der Bewegung der Verschiebelade 2 sind vorteilhafterweise so eingestellt, dass die Transportvorrichtung 1 in der Zeit, in der sich die Verschiebelade 2 oberhalb der Transportvorrichtung 1 befindet, d.h. in der Zeit, in der das Rohholz 11 in Richtung Schnittebene 13 vorgeschoben wird, einen Vorschub um zumindest den Betrag durchführt, der dem Abstand zwischen der Schnittebene 13 und dem Abstandhalter 8 entspricht. Dadurch erfolgt der Wechsel zwischen Schnitt und Vorschub in optimaler Weise.

## Patentansprüche

1. Schneidevorrichtung für Holz, insbesondere Holzstämme, umfassend eine Sägeeinheit (5), insbesondere eine Kreissägeeinheit, welche an der Schneidevorrichtung lage- bzw. ortsfest befestigt ist bzw. deren örtliche Position auf der Schneidevorrichtung nicht veränderbar ist, und eine Transportvorrichtung (1), insbesondere ein Förderband, zum Transport von ungeschnittenem Rohholz (11),
- wobei die Transportvorrichtung (1) im Wesentlichen senkrecht zur Schneidebene (13) der Sägeeinheit (5) in Richtung der Schneidebene (13) fördert,
- wobei eine in ihrer Ausgangsstellung oberhalb der Transportvorrichtung (1) verlaufende bodenlose, das zu zerkleinernde Rohholz (11) aufnehmende, Verschiebelade (2) mit einer der Sägeeinheit (5) nahen Wand (16) und einer der Sägeeinheit (5) fernen Wand (14), vorgesehen ist, die, insbesondere in den Endbereichen der Verschiebelade (2), über zumindest ein Verbindungselement (15) zusammengehalten sind,
**dadurch gekennzeichnet,**
- **dass** zwischen der Sägeeinheit (5) bzw. einem Schneidbereich (17) der Sägeeinheit (5) und der Transportvorrichtung (1) eine als, insbesondere horizontale(r), Tisch bzw. Platte ausgebildete Zufuhrzone (12) vorgesehen ist und die Transportvorrichtung (1) dadurch von der Sägeeinheit (5) räumlich getrennt bzw. beabstandet angeordnet ist,
- **dass** die Verschiebelade (2) parallel zur Schneidebene (13), ausgehend von der Transportvorrichtung (1) über die Zufuhrzone (12) bis in den Schneidbereich (17) der Sägeeinheit (5) hinein als Endstellung, hin und zurück beweg- bzw. verschiebbar ist,
- **dass** die nahe Wand (16) und die ferne Wand (14) der Verschiebelade (2) zueinander parallel sind und
- **dass** die Transportvorrichtung (1) und die Zufuhrzone (12) und gegebenenfalls der Schneidbereich (17) in einer gemeinsamen, insbesondere horizontalen, Ebene (25) liegen.

2. Vorrichtung nach Anspruch 1, **dadurch gekennzeichnet, dass** die Verschiebelade (2) kurz vor der Schneidebene (13) mit einem Endbereich (22) endet
und/oder dass die Verschiebelade (2) in ihrem der Schneidebene (13) nahen Endbereich (22) zur Schneidebene (13) hin offen ausgebildet ist
und/oder dass die Verschiebelade (2) von einer Antriebseinheit (4), insbesondere von einem Hydraulikzylinder, regelmäßig bzw. getaktet hin und her bewegt ist
und/oder dass die Verschiebelade (2) auf im Wesentlichen horizontal verlaufenden und parallel zur Schnittebene (13) angeordneten Linearführungen (9) geführt ist, die vorzugsweise von einer Gerüst- bzw. Tragekonstruktion (20) der Schneidevorrichtung getragen sind.

3. Vorrichtung nach Anspruch 1 oder 2, **dadurch gekennzeichnet, dass** ein Anhaltemechanismus (10), insbesondere in Form eines vor bzw. auf der Verschiebelade (2) angeordneten Bügels, zur Unterbrechung der Bewegung der Verschiebelade (2), insbesondere bei der Einbringung des Rohholzes (11), vorgesehen ist
und/oder dass vor oder über der Verschiebelade (2) eine Notstoppklappe (3) zum sofortigen Stoppen der Bewegung der Verschiebelade (2) vorgesehen ist.

4. Vorrichtung nach einem der Ansprüche 1 bis 3, **dadurch gekennzeichnet, dass** die Transportvorrichtung (1) parallel zur Verschiebelade (2) angeordnet ist und außerhalb des Schneidbereiches (17) der Sägeeinheit (5) verläuft
und/oder dass die Achse der Kreissäge der Sägeeinheit (5) oberhalb oder in der Ebene (25) liegt oder oberhalb oder in der Ebene der Zufuhrzone (12)
und/oder dass die Transportvorrichtung (1) die Schneidebene (13) durchsetzt bzw. sich zu beiden Seiten der Schneidebene (13) erstreckt.

5. Vorrichtung nach einem der Ansprüche 1 bis 4, **dadurch gekennzeichnet, dass** in einem bezüglich der Förderrichtung des Rohholzes (11) vorderen Endbereich (21) der Transportvorrichtung (1) bzw. in dem der Verschiebelade (2) fernen Endbereich (21) der Transportvorrichtung (1), ein, vorzugsweise gefedert gelagertes, Anschlagelement (8) vorgesehen ist, dessen Position bezüglich des vorderen Endbereichs (21) der Transportvorrichtung (1), vorzugsweise zwischen dem vorderen Endbereich (21) und der Schneidebene (13), insbesondere stufenlos, verstellbar ist
und/oder dass, insbesondere auf der der Verschiebelade (2) abgewandten Seite der Schneidebene (13), ein, insbesondere komprimierbar bzw. federnd gelagerter, parallel zur Schneidebene (13) in Richtung zur Transportvorrichtung (1) ausgerichteter, verschiebbarer Holzhalter (7) vorgesehen ist
und/oder dass der Holzhalter (7) einen auslösbaren Arretiermechanismus aufweist, mit dem der Holzhalter (7) für eine bestimmte Zeit, insbesondere bis die Verschiebelade (2) in ihre Ausgangslage zurückgekehrt ist, in komprimierter Position haltbar ist
und/oder dass auf der der Verschiebelade (2) abgewendeten Seite der Schneidebene (13) eine, insbesondere über eine Schurre (22) zugängliche, Ablaufeinrichtung (6), insbesondere ein Förderband, zum Abtransport der abgeschnittenen Holzstücke vorgesehen ist.

6. Vorrichtung nach einem der Ansprüche 1 bis 5, **dadurch gekennzeichnet, dass** die Geschwindigkeit des Vorschubs der Transportvorrichtung (1) und die Geschwindigkeit der Bewegung der Verschiebelade (2) einstellbar sind, wobei die Transportvorrichtung (1) in der Zeit, in der sich die Verschiebelade (2) oberhalb der Transportvorrichtung (1) befindet und das Rohholz (11) über die Schnittebene (13) vorschiebbar ist, einen Vorschub um zumindest den Betrag, der dem Abstand zwischen der Schnittebene (13) und dem Abstandhalter (8) entspricht, durchführt.

7. Vorrichtung nach einem der Ansprüche 1 bis 6, **dadurch gekennzeichnet, dass** die Sägerichtung bzw. Sägewirkung der Sägeeinheit (5) von oben nach unten verläuft.

8. Vorrichtung nach einem der Ansprüche 1 bis 7, **dadurch gekennzeichnet, dass** die Vorrichtung selbstfahrend ist oder auf einer beweglichen bzw. verfahrbaren Gerüst- bzw. Tragekonstruktion (20), insbesondere einem Anhänger, angeordnet ist, wobei vorteilhafterweise die Transportvorrichtung (1) und die Sägeeinheit (5) zu einer Einheit zusammengefasst.

## Claims

1. Cutting device for wood, in particular wooden trunks, comprising a sawing unit (5), in particular a circular sawing unit, which is secured to the cutting device in a fixed manner with respect to situation or location or whose position on the cutting device cannot be changed, and a transporting device (1), in particular a conveyor belt, for transporting uncut rough wood (11),
- wherein the transporting device (1) effects conveyance substantially perpendicularly with respect to the cutting plane (13) of the sawing unit (5) in the direction of the cutting plane (13),
- wherein a bottomless sliding case (2) is provided which in its starting position runs above the transporting device (1) and receives the rough wood (11) that is to be chopped up and has a wall (16) that is close to the sawing unit (5) and a wall (14) that is remote from the sawing unit (5), which walls, in particular in the end regions of the sliding case (2), are held together by way of at least one connecting element (15), **characterised**
- **in that** provided between the sawing unit (5) or a cutting region (17) of the sawing unit (5) and the transporting device (1) there is a feeding zone (12) that is formed as a table or plate, in particular a horizontal table or plate, and the transporting device (1) as a result is arranged so that it is spatially separate from or at a distance from the sawing unit (5),
- **in that** the sliding case (2) can be moved or slid back and forth parallel to the cutting plane (13), starting from the transporting device (1) by way of the feeding zone (12) up to and into the cutting region (17) of the sawing unit (5) as an end position,
- **in that** the close wall (16) and the remote wall (14) of the sliding case (2) are parallel to each other, and
- **in that** the transporting device (1) and the feeding zone (12) and, if applicable, the cutting region (17) lie in a common plane (25), in particular a horizontal plane (25).

2. Device according to claim 1, **characterised in that** the sliding case (2) ends shortly before the cutting plane (13) with an end region (22),
and/or **in that** the sliding case (2) is formed so that in its end region (22) close to the cutting plane (13) it is open towards the cutting plane (13),
and/or **in that** the sliding case (2) is moved to and fro regularly or in a clocked manner by a drive unit (4), in particular by a hydraulic cylinder,
and/or **in that** the sliding case (2) is guided on substantially horizontally extending linear guides (9) arranged parallel to the cutting plane (13) and borne preferably by a framework or supporting construction (20) of the cutting device.

3. Device according to claim 1 or 2, **characterised in that** a stopping mechanism (10), in particular in the form of a clip that is arranged in front of or on the sliding case (2), is provided in order to interrupt the movement of the sliding case (2), in particular when introducing the rough wood (11),
and/or **in that** an emergency stop flap (3) is provided in front of or above the sliding case (2) in order to stop the movement of the sliding case (2) immediately.

4. Device according to one of claims 1 to 3, **characterised in that** the transporting device (1) is arranged parallel to the sliding case (2) and runs outside the cutting region (17) of the sawing unit (5),
and/or **in that** the axis of the circular saw of the sawing unit (5) lies above or in the plane (25) or above or in the plane of the feeding zone (12),
and/or **in that** the transporting device (1) passes through the cutting plane (13) or extends on both sides of the cutting plane (13).

5. Device according to one of claims 1 to 4, **characterised in that** provided in an end region (21) of the transporting device (1) that is at the front with regard to the direction of conveyance of the rough wood (11) or in the end region (21) of the transporting device (1) that is remote from the sliding case (2) there is a stop element (8) which is preferably spring-mounted and whose position is adjustable, in particular is continuously adjustable, with regard to the front end region (21) of the transporting device (1), preferably between the front end region (21) and the cutting plane (13),
and/or **in that** provided in particular on the side of the cutting plane (13) that faces away from the sliding case (2) there is a slidable wood-holder (7) which in particular is mounted resiliently or in such a way that it can be compressed and is aligned so that it is parallel to the cutting plane (13) in the direction of the transporting device (1),
and/or **in that** the wood-holder (7) has a triggerable arresting mechanism with which the wood-holder (7) can be held in a compressed position for a certain time, in particular until the sliding case (2) has returned to its starting position,
and/or **in that** provided on the side of the cutting plane (13) that faces away from the sliding case (2) there is a discharge arrangement (6), in particular a conveyor belt, that is accessible in particular by way of a chute (22) for transporting away the cut-off pieces of wood.

6. Device according to one of claims 1 to 5, **characterised in that** the speed of advance of the transporting device (1) and the speed of the movement of the sliding case (2) can be set, with the transporting device (1) realizing an advance by at least the amount that corresponds to the distance between the cutting plane (13) and the spacer (8) in the time during which the sliding case (2) is located above the transporting device (1) and the rough wood (11) can be advanced over the cutting plane (13).

7. Device according to one of claims 1 to 6, **characterised in that** the sawing direction or sawing action of the sawing unit (5) runs from the top to the bottom.

8. Device according to one of claims 1 to 7, **characterised in that** the device is self-propelling or is arranged on a movable or travelling framework or supporting construction (20), in particular a trailer, with the transporting device (1) and the sawing unit (5) advantageously being combined to form a unit.

## Revendications

1. Dispositif de coupe de bois, en particulier de troncs d'arbre, comportant une unité de scie (5), en particulier une unité de scie circulaire, qui est fixée sur le dispositif de coupe de manière stable ou stationnaire, ou dont la position spatiale ne peut être modifiée sur le dispositif de coupe, et un dispositif de transport (1), en particulier une bande transporteuse, permettant de véhiculer le bois brut (11) non découpé,
- le dispositif de transport (1) véhiculant le bois sensiblement perpendiculairement au plan de coupe (13) de l'unité de scie (5), dans la direction du plan de coupe (13),
- un chargeur coulissant (2) recevant le bois brut (11) à désintégrer, sans fond, s'étendant au-dessus du dispositif de transport (1) dans sa position initiale, étant doté d'une paroi (16) proche de l'unité de scie (5) et d'une paroi (14) éloignée de l'unité de scie (5), qui sont maintenues solidaires par l'intermédiaire d'au moins un élément de raccordement (15), en particulier dans les zones d'extrémité du chargeur coulissant (2),
**caractérisé en ce que**,
- entre l'unité de scie (5) ou une zone de coupe (17) de l'unité de scie (5) et le dispositif de transport (1), est prévue une zone d'alimentation (12) configurée sous la forme d'une table ou plaque en particulier horizontale, et le dispositif de transport (1) est alors disposé en étant séparé ou éloigné spatialement de l'unité de scie (5),
- le chargeur coulissant (2) peut être déplacé et décalé selon un mouvement de va-et-vient parallèle au plan de coupe (13), à partir du dispositif de transport (1) en passant par la zone d'alimentation (12) pour atteindre la zone de coupe (17) de l'unité de scie (5), qui représente la position finale,
- la paroi proche (16) et la paroi éloignée (14) du chargeur coulissant (2) sont parallèles l'une à l'autre et
- le dispositif de transport (1) et la zone d'alimentation (12), et le cas échéant la zone de coupe (17) se trouvent dans un plan (25) commun, en particulier horizontal.

2. Dispositif selon la revendication 1, **caractérisé en ce que** le chargeur coulissant (2) se termine par une zone d'extrémité (22), peu avant le plan de coupe (13),
et/ou le chargeur coulissant (2), dans sa zone d'extrémité (22) proche du plan de coupe (13), est configuré de manière à déboucher vers le plan de coupe (13),
et/ou le chargeur coulissant (2) se déplace selon un mouvement de va-et-vient régulièrement ou de manière synchronisée grâce à une unité d'entraînement (4), en particulier un vérin hydraulique,
et/ou le chargeur coulissant (2) est guidé sur des guides linéaires (9) s'étendant sensiblement horizontalement et disposés parallèlement au plan de coupe (13), lesquels guides linéaires sont de préférence supportés par une construction support ou d'ossature (20) du dispositif de coupe.

3. Dispositif selon la revendication 1 ou 2, **caractérisé en ce qu'**un mécanisme de maintien (10), en particulier sous la forme d'un étrier disposé avant ou sur le chargeur coulissant (2), est prévu afin d'interrompre le déplacement du chargeur coulissant (2), en particulier lors de l'introduction du bois brut (11),
et/ou avant ou sur le chargeur coulissant (2), est prévu un volet d'arrêt d'urgence (3) permettant d'arrêter immédiatement le déplacement du chargeur coulissant (2).

4. Dispositif selon l'une quelconque des revendications 1 à 3, **caractérisé en ce que** le dispositif de transport (1) est disposé parallèlement au chargeur coulissant (2) et s'étend à l'extérieur de la zone de coupe (17) de l'unité de scie (5),
et/ou l'axe de la scie circulaire de l'unité de scie (5) se trouve au-dessus ou dans le plan (25) ou, au-dessus ou dans le plan de la zone d'alimentation (12),
et/ou le dispositif de transport (1) croise le plan de coupe (13) ou s'étend vers les deux côtés du plan de coupe (13).

5. Dispositif selon l'une quelconque des revendications 1 à 4, **caractérisé en ce que**, dans une zone d'extrémité (21) avant par rapport au sens de déplacement du bois brut (11), du dispositif de transport (1) ou dans la zone d'extrémité (21) éloignée du chargeur coulissant (2) du dispositif de transport (1), est prévu un élément de butée (8) de préférence disposé de manière élastique, dont la position peut être réglée, en particulier progressivement, par rapport à la zone d'extrémité avant (21) du dispositif de transport (1), en particulier entre la zone d'extrémité avant (21) et le plan de coupe (13),
et/ou **en ce que**, en particulier sur la face opposée au chargeur coulissant (2) du plan de coupe (13), est prévu un conteneur de bois (7) mobile, disposé en particulier de manière à pouvoir être comprimé ou de manière élastique, orienté parallèlement au plan de coupe (13) en direction du dispositif de transport (1),
et/ou **en ce que** le conteneur de bois (7) présente un mécanisme de blocage pouvant être déclenché, grâce auquel le conteneur de bois (7) peut être maintenu dans une position comprimée sur une durée déterminée, en particulier jusqu'à ce que le chargeur coulissant (2) revienne à sa position initiale,
et/ou **en ce que**, du côté opposé au chargeur coulissant (2) du plan de coupe (13), est prévu un dispositif d'évacuation (6) accessible en particulier par l'intermédiaire d'une goulotte (22), en particulier une bande transporteuse, permettant d'expulser les pièces de bois coupées.

6. Dispositif selon l'une quelconque des revendications 1 à 5, **caractérisé en ce que** la vitesse d'avancement du dispositif de transport (1) et la vitesse de déplacement du chargeur coulissant (2) peuvent être réglées, sachant que le dispositif de transport (1), pendant la durée où le chargeur coulissant (2) se trouve au-dessus du dispositif de transport (1) et le bois brut (11) peut être avancé au-dessus du plan de coupe (13), fait l'objet d'un avancement dont la valeur correspond au moins à la distance entre le plan de coupe (13) et l'entretoise (8).

7. Dispositif selon l'une quelconque des revendications 1 à 6, **caractérisé en ce que** la direction de sciage ou l'action de sciage de l'unité de scie (5) va de haut en bas.

8. Dispositif selon l'une quelconque des revendications 1 à 7, **caractérisé en ce que** le dispositif est automoteur ou est disposé sur une construction support ou d'ossature (20) mobile ou pouvant être déplacée, en particulier un élément tracté, sachant que, de manière avantageuse, le dispositif de transport (1) et l'unité de scie (5) sont regroupés pour former une unité.
